# EUROPÄISCHE PATENTSCHRIFT

(11) **EP 0 389 885 B1**
(45) Veröffentlichungstag und Bekanntmachung des Hinweises auf die Patenterteilung: **21.04.1993**
(21) Anmeldenummer: 90104962.7
(22) Anmeldetag: 16.03.1990
(51) Int. Cl.: F16L 55/16, F16L 55/162, F16L 55/18, F16L 1/028, E03B 1/02, E03F 3/06

(54) **Gerät zum Aufbrechen und Verdrücken alter Rohre in das umgebende Erdreich**
Appliance for breaking open and depressing old pipes into the surrounding earth
Appareil pour briser et presser des tuyaux anciens dans la terre environnante

(30) Priorität: 30.03.1989 DE 3910354
(43) Veröffentlichungstag der Anmeldung: 03.10.1990
(73) Patentinhaber: diga - die gasheizung GmbH, D-45307 Essen (DE)
(72) Erfinder: Luksch, Edmund, Dipl.-Ing., D-6056 Heusenstamm (DE)

(56) Entgegenhaltungen:
- EP-A- 0 094 694
- DE-A- 3 602 720
- DE-C- 3 800 869
- DE-C- 3 815 232
- DE-C- 3 823 900
- FR-A- 2 610 696
- GB-A- 2 169 681

## Beschreibung

Die Erfindung bezieht sich auf ein Gerät zum Aufbrechen und Verdrücken alter Rohre, insbesondere Stahlrohre, in das umgebende Erdreich, wobei eine Messeranordnung zum Aufbrechen des Altrohrs und eine Bodenrakete mit konischem Kopfteil zum Aufweiten und Verdrücken des aufgebrochenen Rohres an einem Zugseil durch das Altrohr gezogen werden. Unter dem Begriff "Aufbrechen" werden im Rahmen der vorliegenden Erfindung alle Arten des Zerteilens von Rohren, insbesondere das Aufschneiden, Aufsprengen und Auftrennen verstanden.

Geräte dieser Art dienen dem grabenlosen Verlegen von Versorgungsrohren. Im Vergleich zum herkömmlichen Rohrverlegen in ausgehobenen Gräben wird der Verkehr beim grabenlosen Verlegen von Neurohren wesentlich weniger belästigt und behindert.

Bei einem aus der DE-C-38 00 869 bekannten Rohraufweitungsgerät ist der Raketenkopf mit einem Messer mit einer zur Längsachse geneigten Schneide bestückt und der Schneide gegenüberliegend eine zur Raketenlängsachse parallele Abstützfläche vorgesehen, die am hinteren Ende in eine Aufreißschneide übergeht. Die zur Längsachse der Bodenrakete parallele Abstützfläche soll die Vortriebskraft auf das Aufbrechen des Rohrs an einer einzigen Stelle, nämlich an der Stelle der einzigen Schneide, konzentrieren und einer Selbsthemmung infolge eines zu großen Keilwinkels entgegenwirken.

Ein besonderes Problem bereitete bisher das Auftrennen von Stahlleitungen. Dabei werden fest aufgesetzte Schneiden verwendet, die entweder auf dem Raketenkonus oder auf einem gesonderten und am Raketenkopf befestigten konischen Körper befestigt. Der Durchmesser des Konus ist größer als der Innendurchmesser der aufzuweitenden Rohrleitung. Bei kleineren Rohrenennweiten, d.h. unterhalb DN 100, kommt es vor, daß sich die Bodenrakete schneller als das von einer Seilwinde gezogene Zugseil vorwärtsbewegt. Die Folge ist, daß das Zugseil spannungslos wird, die Rakete aus der Führung herausspringen kann, sich neben dem Rohr einen Weg sucht und u.U. benachbarte Leitungen über die Messeranordnung beschädigt. Bei symmetrisch um die Achse auf dem Raketenkopf aufgesetzten Schneiden - in der Regel werden zwei um 180° gegeneinander versetzte Schneiden verwendet - wird zwar anfangs ein mehrfacher, in der Regel also zweiseitiger Schnitt der Rohrleitung erreicht; nach wenigen Metern verschiebt sich die Rakete jedoch in Richtung des geringsten Seitenwiderstandes, und danach wird das Stahlrohr nur noch an einer Stelle geschnitten.

Beim Durchfahren einer Strecke dreht sich die Bodenrakete um ihre Längsachse. Um einen Drall auf das Zugseil als Resultat dieser Raketendrehung zu vermeiden, mußte bisher stets ein Entdraller dem Zugseil zugeordnet werden. Die Messeranordnung herkömmlicher Rohraufweitungsgeräte folgt zumindest teilweise der Drehbewegung der Bodenrakete. Dadurch erhalten die aufgeschnittenen Stahlrohrteile auch bei einer zweiseitigen Schnittführung einen korkenzieherartigen Verlauf, hemmen nachfolgende Rohraufweitungen und rücken mit ihren scharfen Kanten erheblich über den Radius der verdrängenden Rakete in Erdreich hinaus.

Die zuvor geschilderten Effekte treten vor allem beim Aufbrechen (Aufschneiden) und Verdrücken von Stahlleitungen auf. Brechbare Leitungen, d.h. solche aus Grauguß, Asbest, Zement oder PVC, lassen sich im sogenannten Berst-Lining-Verfahren problemloser aufweiten. Rohrleitungsbauer müssen jedoch eine Vielzahl von Spezialraketen für Stahl- und andererseits für Gußrohre bereitstellen, was einen erheblichen Kostenfaktor bei der grabenlosen Verlegung von Versorgungsleitungen darstellt.

Der Erfindung liegt die Aufgabe zugrunde, die Nachteile der bisherigen Geräte weitgehend auszuräumen und eine zumindest zweiseitige Schnittführung im wesentlichen parallel zur Vortriebsachse und die Aufrechterhaltung der Raketenzentrierung im Rohr bei allen gängigen Versorgungsleitungen zu gewährleisten.

Zur Lösung dieser Aufgabe wird ein Gerät gemäß Anspruch 1 vorgeschlagen.

Das Rohraufweitungsgerät ist mit einer durch das Altrohr zu ziehenden Bodenrakete, die einen konischen Kopfteil zum Aufweiten des Altrohrs aufweist, einer vor dem wirksamen konischen Kopfteil angeordneten Messeranordnung und einem Zugseil versehen, das an der Bodenrakete verankert ist. Dieses Gerät zeichnet sich erfindungsgemäß dadurch aus, daß dem Kopfteil der Bodenrakete ein Führungskörper aufgesteckt ist, der einen zumindest teilweise vor der Messeranordnung gelegenen, zur Raketenachse etwa zentrisch verlaufenden Zylinderabschnitt aufweist, daß der Außendurchmesser des Zylinderabschnitts kleiner ist als der Altrohr-Innendurchmesser und daß jede Schneide der Messeranordnung radial über den ihr voreilenden Zylinderabschnitt der Führung um ein Maß vorsteht, das größer ist als die genannte Durchmesserdifferenz zwischen Altrohr-Innendurchmesser und Zylinder-Außendurchmesser.

Die sowohl der Messeranordnung als auch der Verdrängungsrakete vorauseilende Führung zentriert die Vortriebsachse soweit auf die Altrohrachse, daß ein Mehrfachschnitt des Altrohres gewährleistet ist. Durch das Aufbrechen des Altrohrs in mehreren parallelen Schnitten können die verdrängten Flächen relativ schmal gehalten werden. Der Führungskörper leitet auch die Bodenrakete durch das aufgebrochene oder geschnittene Rohr; die auf der Achse des Altrohrs im wesentlichen zentriert gehaltene Rakete verdrängt im übrigen wie bisher die Rohrsegmente ins umgebende Erdreich, wobei vorzugsweise die Kanten der Schnittfläche nicht über den Radius der Rakete hinausreichen und somit keine Gefahr für andere Versorugngsleitungen darstellen. Ein wesentlicher Vorteil der Erfindung liegt darin, daß die gleichen Boden- bzw. Verdrängungsraketen sowohl für die Aufweitung von Stahlrohren als auch von Gußrohren eingesetzt werden können. Die Erfindung macht daher einen einzigen Raketentyp bei Versorgungsleitungen praktisch beliebigen Werkstoffs universell einsetzbar. Dementsprechend gesenkt werden die Lagerhaltungs- bzw. Vorhaltekosten.

Vorzugsweise werden die Schneiden der Messeranordnung beim Aufbrechen und Verdrücken des Altrohrs drehfest zum Führungskörper gehalten. Die Bodenrakete kann sich dagegen beim Durchfahren der Strecke ohne Mitnahme der Messeranordnung um ihre Längsachse drehen.

Bei der Montage des Rohraufweitungsgeräts wird das Ende des Zugseils zunächst zentral durch den zylindrischen Abschnitt der Führung durchgesteckt und an dem Raketenkopf verankert. Der Führungskörper wird dem konischen Kopfteil lose aufgesteckt. Beim Aufweiten des Altrohrs wird der Führungskörper über den Raketenkopfteil vom Zugseil axial mitgenommen.

In alternativer Verfahrensweise kann die Führung aber auch über das Zugseil axial fest auf dem Raketenkopf verspannt sein.

Vorteilhafte Weiterbildungen der Erfindung sind in den Unteransprüchen gekennzeichnet.

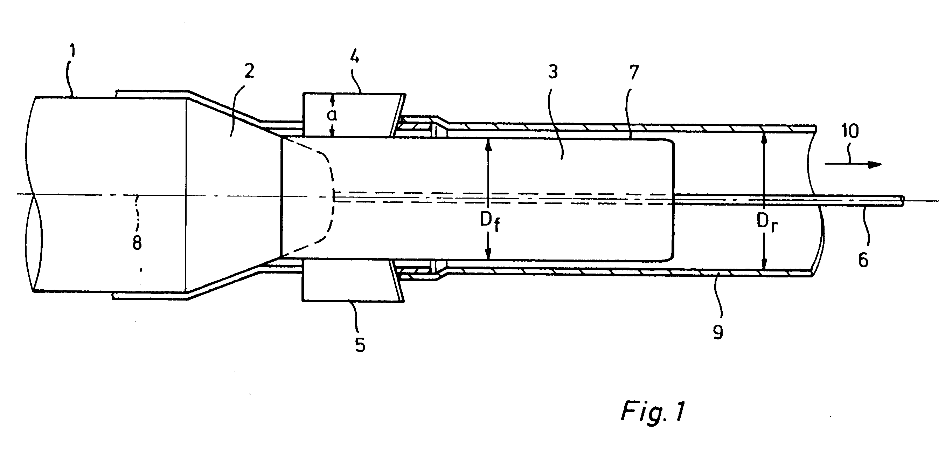

Im folgenden wird die Erfindung anhand eines in der Zeichnung schematisch dargestellten Ausführungsbeispiels näher erläutert.

In der einzigen Figur ist der beim Aufbrechen bzw. Aufschneiden und Verdrücken alter Rohre wirksame Teil eines erfindungsgemäß ausgebildeten Rohraufweitungsgeräts dargestellt.

Das in der Zeichnung dargestellte Rohraufweitungsgerät weist eine Bodenrakete 1, einen dem konischen Kopfteil 2 der Bodenrakete axial aufgesteckten Führungskörper 3, eine Messeranordnung mit zwei um 180° winkelversetzten Schneiden 4, 5 und ein Zugseil 6 auf, das durch in der Zeichnung nicht dargestellte Mittel an dem Kopfteil 2 der Bodenverdrängungsrakete 1 verankert ist. Der Führungskörper 3 hat einen zylindrischen Führungsabschnitt 7, der koaxial zur Geräteachse 8 lose auf den konusförmigen Kopfteil der Boden- bzw. Verdrängungsrakete 1 aufgesteckt ist. Die beiden Schneiden 4 und 5 sind am hinteren Ende des Führungskörpers 3 aufgeschweißt und springen von der zylindrischen Mantelfläche 7 aus diametral nach außen vor. Die zylindrische Mantelfläche 7 des Führungskörpers 3 hat einen Außendurchmesser Df, der etwas kleiner als der Innendurchmesser Dr des aufzuschneidenden und zu verdrängenden Altrohrs 9 ist. Die Durchmesserdifferenz b = Dr-Df sollte möglichst klein gehalten werden, um die Führungsfunktion des Führungskörpers 3 auf der Mittelachse des Rohrs 9 zu verbessern. Um zu vermeiden, daß trotz des der Messeranordnung 4, 5 vorauseilenden Führungskörpers 3 ein Ausweichen der Messeranordnung aufgrund unterschiedlicher Schneidwiderstände 4 an den beiden Schneiden stattfindet und die Messeranordnung nur mit einer Schneide 4 oder 5 wirksam ist, muß jede einzelne Schneide um ein Maß a gegenüber der zylindrischen Führungsfläche 7 des Führungskörpers 3 nach außen vorspringen, das größer als die Durchmesserdifferenz b ist. (In der Figur ist das Gerät mit dem Führungskörper 3 genau auf der Mittelachse des Altrohrs 9 dargestellt, so daß die zylindrische Mantelfläche 7 allseits einen Abstand von 0,5 b zur Rohrinnenwand hat.)

Wie zu sehen ist, werden sowohl die Messeranordnung 4, 5 als auch die Bodenrakete 1 mit deren Kopfteil 2 mit Hilfe des vorauseilenden Abschnitts 7 des Führungskörpers im wesentlichen auf der Mittelachse des Altrohrs 9 zentriert gehalten. Ein seitliches Ausweichen der Messeranordnung und der Bodenrakete aus dem Altrohr 9 ist ausgeschlossen. Die Schneidlinie jeder Schneide 4, 5 verläuft daher gleichbleibend auf einer zur Rohrachse im wesentlichen parallelen Linie, und zwar unabhängig von etwaigen Drehbewegungen der Boden- bzw. Verdrängungsrakete 1 um deren Geräteachse 8. Eines besonderen Entdrallers bedarf es nicht. Der Führungskörper 3 ist auf einer geeignet ausgebildeten Ringfläche am konischen Kopfteil 2 der Bodenrakete 1 axial abgestützt und wird über diese ringförmige Abstützstelle vom Zugseil 6 in der Vortriebsrichtung 10 durch das Altrohr 9 gezogen. Die Bodenrakete verdrängt die zuvor von den Schneiden 4 und 5 achsparallel aufgebrochenen Rohrsegmente radial in das umgebende Erdreich; insoweit entspricht die Rakete nach Ausbildung und Funktionsweise herkömmlichen Bodenraketen, wie sie beispielsweise zum Aufbrechen von Gußrohren verwendet werden.

## Patentansprüche

1. Gerät zum Aufbrechen und Verdrücken alter Rohre, insbesondere Stahlrohre, in das umgebende Erdreich, mit einer durch das Altrohr (9) zu ziehenden Bodenrakete (1), die einen konischen Kopfteil (2) zum Aufweiten des Altrohres aufweist, einer vor dem wirksamen konischen Kopfteil angeordneten Messeranordnung (4, 5) und einem Zugseil (6), das an der Bodenrakete verankert ist,
dadurch gekennzeichnet,
daß dem Kopfteil (2) der Bodenrakete (1) ein Führungskörper (3) lose aufgesteckt ist, der einen der Messeranordnung in Seilzugrichtung (10) vorgesetzten, zur Raketenachse (8) etwa konzentrisch verlaufenden Zylinderabschnitt (7) mit geringerem Außendurchmesser (Df) als der Altrohr-Innendurchmesser (Dr) aufweist, wobei jede Schneide (4, 5) der Messeranordnung über den Zylinderabschnitt (7) um ein Maß (a) radial vorsteht, das gröber ist als die genannte Durchmesserdifferenz (b) zwischen Altrohr-Innendurchmesser (Dr) und Außendurchmesser (Df) des Zylinderabschnittes (7), und daß das Zugseil (6) axial durch den Zylinderabschnitt (7) des Führungskörpers (3) bis zum Kopfteil (2) der Bodenrakete (1) durchgeführt ist.

2. Gerät nach Anspruch 1,
dadurch gekennzeichnet, daß die Schneiden (4, 5) der Messeranordnung drehfest zum Führungskörper (3) angeordnet sind.

3. Gerät nach Anspruch 1 oder 2,
dadurch gekennzeichnet, daß die Schneiden (4, 5) in gleichmäßiger Winkelverteilung am hinteren Ende des Führungskörpers (3) aufgeschweißt sind.

4. Gerät nach einem der Ansprüche 1 bis 3,
dadurch gekennzeichnet, daß der Führungskörper (3) als rotationsymetrische, vorzugsweise zylindrische Hülse ausgebildet ist.

5. Gerät nach einem der Ansprüche 1 bis 4,
dadurch gekennzeichnet, daß der Führungskörper (3) über das Zugseil (6) auf dem Kopfteil (2) der Bodenrakete (1) verspannt ist.

6. Gerät nach Anspruch 5,
dadurch gekennzeichnet, daß ein Gewindebolzen axial in das Zugseil (6) eingebunden ist und daß der Führungskörper (3) durch eine auf den Gewindebolzen aufgeschraubte Schraubkappe mit dem Kopfteil (2) der Bodenrakete (1) verspannt ist.

7. Gerät nach einem der Ansprüche 1 bis 6,
dadurch gekennzeichnet, daß der Führungskörper (3) über eine Ringfläche auf dem Kopfteil (2) der Bodenrakete (1) abgestützt ist.

8. Gerät nach einem der Ansprüche 1 bis 7,
dadurch gekennzeichent, daß der Führungskörper (3) und die Bodenrakete (1) um die Geräteachse (8) relativ zueinander drehbar angeordnet sind.

## Claims

1. An apparatus for bursting and displacing existing pipes, in particular steel pipes, into the surrounding soil comprising a mole (1) to be pulled through the existing pipe (9), said mole (1) being provided with a cone-shaped head portion (2) for widening the existing pipe, a blade arrangement (4, 5) arranged in front of the effective head portion and a cable (6) anchored to the mole, characterised in that a guidance portion (3) is loosely attached to the head portion (2) of the mole (1), said guidance portion (3) having a cylindrical portion (7) running roughly concentrically to the mole centreline (8) and preceding the blade arrangement in the direction of towing (10), the outside diameter (D_{f}) of the cylindrical portion (7) being smaller than the inside diameter (Dᵣ) of the existing pipe, each blade (4, 5) of the blade arrangement protruding radially from the cylindrical portion (7) by a distance (a) which is greater than the difference in diameter (b) between the inside diameter (Dᵣ) of the existing pipe and the outside diameter (D_{f}) of the cylindrical portion (7), and that the cable (6) passes axially through the cylindrical portion (7) of the guidance portion (3) to the head portion (2) of the mole (1).

2. An apparatus according to claim 1, characterised in that the blades (4, 5) of the blade arrangement are attached rigidly to the guidance portion (3).

3. An apparatus according to claim 1 or 2, characterised in that the blades (4, 5) are welded equiangularly to the rear end of the guidance portion (3).

4. An apparatus according to any one of claims 1 to 3, characterised in that the guidance portion (3) is a rotationally symmetrical, preferably cylindrical sleeve.

5. An apparatus according to any one of claims 1 to 4, characterised in that the guidance portion (3) is tensioned relative to the head portion (2) of the mole (1) by the cable (6).

6. An apparatus according to claim 5, characterised in that a threaded bolt is integrated axially in the cable (6) and that the guidance portion (3) is tensioned relative to the head portion (2) of the mole (1) by a nut screwed onto said threaded bolt.

7. An apparatus according to any one of claims 1 to 6, characterised in that the guidance portion (3) is supported by an annular surface on the head portion (2) of the mole (1).

8. An apparatus according to any one of claims 1 to 7, characterised in that the guidance portion (3) and mole (1) are arranged such that they are rotatable relative to each other around the apparatus centreline (8).

## Revendications

1. Dispositif pour l'éclatement et le déplacement de tubes existants, plus particulièrement de tubes en acier, dans le sol ambiant, comprennant une taupe (1) tirée à travers le tube existant (9), ladite taupe ayant une tête conique (2) pour élargir le tube existant, un arrangement de lames (4, 5) disposé devant la tête active et un câble tracteur (6) ancré dans la taupe, caractérisé par le fait qu'un corps de guidage (3) est légèrement attaché à la tête (2) de la taupe (1), ledit corps de guidage ayant une section cylindrique courant concentriquement par rapport à l'axe de la taupe et précédant l'arrangement de lames en direction de la traction (10), le diamètre extérieur (D_{f}) de la section cylindrique étant inférieure au diamètre intérieur (Dᵣ) du tube existant, que chaque lame (4, 5) de l'arrangement de lames fait radialement saillie de la section cylindrique d'une distance (a) étant supérieure à la diférence (b) entre le diamètre intérieur (Dᵣ) du tube existant et le diamètre extérieur (D_{f}) de la section cylindrique (7), et que le câble tracteur (6) passe axialement à travers la section cylindrique (7) du corps de guidage (3) jusqu'à la tête (2) de la taupe (1).

2. Dispositif selon la revendication 1, caractérisé par le fait que les lames (4, 5) de l'arrangement de lames sont disposées de manière rigide sur le corps de guidage (3).

3. Dispositif selon la revendication 1 ou 2, caractérisé par le fait que les lames (4, 5) sont soudées équiangulairement sur la partie arrière du corps de guidage (3).

4. Dispositif selon l'une des revendications 1 à 3, caractérisé par le fait que le corps de guidage (3) est conçu sous forme de douille rotatoirement symétrique, de préférence cylindrique.

5. Dispositif selon l'une des revendications 1 à 4, caractérisé par le fait que le corps de guidage (3) est haubané par rapport à la tête (2) de la taupe (1) à travers le câble tracteur (6).

6. Dispositif selon la revendication 5, caractérisé par le fait qu'un boulon fileté est intégré axialement dans le câble tracteur (6) et que le corps de guidage (3) est haubané par rapport à la tête (2) de la taupe (1) à travers un bouchon fileté vissé sur le boulon fileté.

7. Dispositif selon l'une des revendications 1 à 6, caractérisé par le fait que le corps de guidage (3) est soutenu par une surface annulaire (2) de la taupe (1).

8. Dispositif selon l'une des revendications 1 à 7, caractérisé par le fait que le corps de guidage (3) et la taupe (1) sont disposés de la sorte qu'ils sont rotatoires l'un par rapport à l'autre autour de l'axe (8) du dispositif.
